# EUROPEAN PATENT SPECIFICATION

(11) **EP 3 793 275 B1**
(45) Date of publication and mention of the grant of the patent: **10.05.2023**
(21) Application number: 19810998.5
(22) Date of filing: 10.05.2019
(51) Int. Cl.: H04W 4/029, H04W 64/00, G10L 17/00

(54) **LOCATION REMINDER METHOD AND APPARATUS, STORAGE MEDIUM, AND ELECTRONIC DEVICE**
VERFAHREN UND VORRICHTUNG FÜR STANDORTERINNERUNG, SPEICHERMEDIUM UND ELEKTRONISCHE VORRICHTUNG
PROCÉDÉ ET APPAREIL DE RAPPEL D'EMPLACEMENT, SUPPORT D'INFORMATIONS ET DISPOSITIF ÉLECTRONIQUE

(30) Priority: 30.05.2018 CN 201810540827
(43) Date of publication of application: 17.03.2021
(73) Proprietor: GUANGDONG OPPO MOBILE TELECOMMUNICATIONS CORP., LTD., Dongguan Guangdong 523860 (CN)
(72) Inventor: LIU, Jiafei, Dongguan, Guangdong 523860 (CN); DA, Jian, Dongguan, Guangdong 523860 (CN); XIONG, Wanjiang, Dongguan, Guangdong 523860 (CN); LI, Haiquan, Dongguan, Guangdong 523860 (CN); ZHOU, Wurun, Dongguan, Guangdong 523860 (CN); DONG, Zhi, Dongguan, Guangdong 523860 (CN); ZHU, Zhonglei, Dongguan, Guangdong 523860 (CN); WEN, Zhaoyan, Dongguan, Guangdong 523860 (CN); GAO, Liang, Dongguan, Guangdong 523860 (CN); LI, Guan, Dongguan, Guangdong 523860 (CN)
(74) Representative: Manitz Finsterwald Patent- und Rechtsanwaltspartnerschaft mbB
(86) International application number: PCT/CN2019/086381
(87) International publication number: WO 2019/228172

(56) References cited:
- EP-A1- 2 930 916
- WO-A1-00/28721
- CN-A- 106 412 272
- CN-A- 106 878 535
- CN-A- 107 666 536
- CN-A- 108 833 688
- US-A1- 2012 258 701
- US-A1- 2016 093 304
- US-A1- 2017 154 519

## Description

### TECHNICAL FIELD

The present disclosure generally relates to the technical field of terminals, and in particular to a method and apparatus for location reminder, and an electronic device.

### BACKGROUND

With the development of technology, the interaction between humans and machines has become more and more abundant. In the related art, users can control a terminal through voice. That is, after receiving voice information sent by the user, the terminal can parse the voice information to obtain a control instruction. Before executing the control instruction, the terminal needs to extract voiceprint features from the voice information, and perform voiceprint recognition according to the extracted voiceprint features. Only after the voiceprint recognition is passed, the terminal will execute the control instruction corresponding to the voice information.

US patent application US 2017/0154519 A1 discloses an alarm method, a terminal, and a storage medium. The method may include: after a terminal receiving a first voice signal, the terminal matches the first voice signal with a preset voice template (S101); when the first voice signal successfully matches the preset voice template, the terminal extracts a voiceprint of the first voice signal (S102); the terminal matches the voiceprint of the first voice signal with a preset voiceprint template (S 103); and when the voiceprint of the first voice signal successfully matches the preset voiceprint template, the terminal generates an alarm (S104).

EP patent application EP 2 930 916 A1 discloses a method for controlling a background through voice, comprising the following steps: saving a voiceprint feature of an owner of a mobile terminal in the mobile terminal, and establishing a voice bank, wherein the voice bank comprises a plurality of standard voice instructions, each standard voice instruction is used for controlling a corresponding background task, and the standard voice instruction has the voice print feature of the owner; monitoring a sound of the surrounding environment of the mobile terminal in real time; extracting a voiceprint feature of the monitored sound; judging whether a person making the monitored sound is the owner of the mobile terminal or not according to the extracted voiceprint feature and the voiceprint feature of the owner in the voice bank; if it is judged that the person making the sound is the owner of the mobile terminal, further judging whether the monitored sound contains the standard voice instructions in the voice bank or not; and if it is judged that the monitored sound contains the standard voice instructions, controlling corresponding background tasks according to the standard voice instructions. Also proposed is a mobile terminal. Thereby, the operation of the background tasks can be controlled through voice.

### SUMMARY OF THE DISCLOSURE

Embodiments of the present disclosure provide a method as set out in claims 1 to 7, an apparatus for location reminder as set out in claims 9 to 12, and an electronic device as set out in claim 13, which can improve flexibility of a terminal when implementing voice control.

### BRIEF DESCRIPTION OF THE DRAWINGS

Detailed embodiments of the present disclosure are described in detail with the accompanying drawings to make technical solutions and other advantageous effects of the present disclosure more obvious.
FIG. 1 is a flow chart of a method for location reminder according to some embodiments of the present disclosure;
FIG. 2 is another flow chart of a method for location reminder according to some embodiments of the present disclosure;
FIG. 3 to FIG. 5 are schematic diagrams of scenarios for a method for location reminder according to some embodiments of the present disclosure.
FIG. 6 is a structural view of an apparatus for location reminder according to some embodiments of the present disclosure;
FIG. 7 is another structural view of an apparatus for location reminder according to some embodiments of the present disclosure;
FIG. 8 is a structural view of a mobile terminal according to an embodiment of the present disclosure; and
FIG. 9 is another structural view of a mobile terminal according to an embodiment of the present disclosure.

### DETAILED DESCRIPTION

Referring to the drawings, in which like reference numerals represent same components, the principles of the present disclosure are illustrated by the implementation in a suitable computing environment. The following description is based on specific embodiments of the present disclosure as illustrated, and should not be construed as limiting other specific embodiments that are not described herein.

Embodiments of the present disclosure provide a method for location reminder, which includes:
extracting a target voiceprint feature from a voice configured for searching for a terminal after receiving the voice;
determining whether the target voiceprint feature meets a preset condition in relation to a preset voiceprint feature, in response to the target voiceprint feature unmatching with the preset voiceprint feature;
detecting whether the terminal is located at a preset location in response to the target voiceprint feature meeting the preset condition in relation to the preset voiceprint feature; and
triggering a location reminder in a preset manner for reminding a user where the terminal is, in response to the terminal being located at the preset location.

In some embodiments, before the triggering a location reminder in a preset manner for reminding a user where the terminal is, the method further includes: obtaining a noise value of a current environment; and determining a target volume value according to the noise value.

The triggering a location reminder in a preset manner for reminding a user where the terminal is comprises triggering the location reminder by a ringtone with the target volume value for reminding the user where the terminal is.

In some embodiments, after the triggering the location reminder by a ringtone with the target volume value, the method further includes: increasing the target volume value of the ringtone, in response to the terminal not being found by the user after a preset duration; and continuously triggering the location reminder by the ringtone with the increased target volume value for reminding the user where the terminal is.

In some embodiments, before the triggering a location reminder in a preset manner for reminding a user where the terminal is , the method further includes: obtaining a noise value of a current environment; and obtaining a volume value of the voice, in response to the noise value is less than a preset threshold.

The triggering a location reminder in a preset manner for reminding a user where the terminal is comprises: triggering the location reminder by a ringtone with the volume value for reminding the user where the terminal is.

In some embodiments, the determining whether the target voiceprint feature meets a preset condition in relation to a preset voiceprint feature comprises: obtaining a target matching degree between the target voiceprint feature and the preset voiceprint feature; obtaining a difference between the target matching degree and a preset matching threshold; determining the target voiceprint feature meets the preset condition in relation to the preset voiceprint feature, in response to the difference being less than or equal to a preset difference; and determining the target voiceprint feature does not meet the preset condition in relation to the preset voiceprint feature, in response to the difference being greater than the preset difference.

In some embodiments, the larger the noise value of the current environment is, the larger the target volume value is.

In some embodiments, the determining whether the terminal is located at a preset location comprises: obtaining information of a WiFi access point to which the terminal is currently connected; and determining whether the information of the WiFi access point is information of a preset WiFi access point, wherein the information of the preset WiFi access point being information of any of at least one WiFi access point at the preset location; and determining that the terminal is located at the preset location, in response the information of the WiFi access point being the information of the preset WiFi access point.

It can be understood that the execution subject of embodiments of the present disclosure may be a terminal device such as a smart phone or a tablet computer.

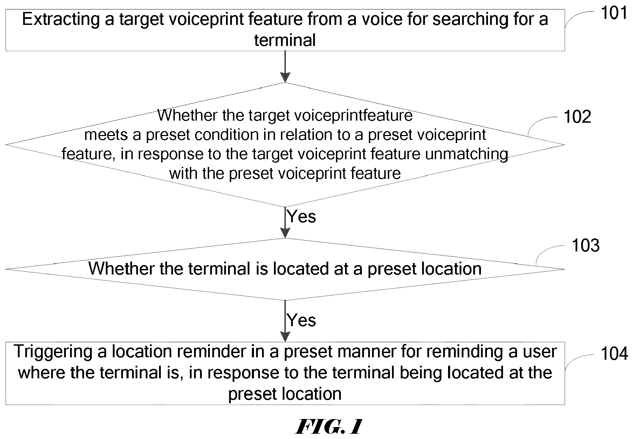

FIG. 1 is a schematic flowchart of a method for location reminder according to some embodiments of the present disclosure. The method may include actions/operations in the following.

At 101, the method extracts a target voiceprint feature from a voice for searching for a terminal after receiving the voice.

With the development of technology, the interaction between humans and machines has become more and more abundant. In the related art, users can control a terminal through voice. That is, after receiving voice information sent by the user, a terminal can parse the voice information to obtain a control instruction. Before executing the control instruction, the terminal needs to extract voiceprint features from the voice information, and perform voiceprint recognition according to the extracted voiceprint features. Only after the voiceprint recognition is passed, the terminal will execute the control instruction corresponding to the voice information. However, in the related art, the terminal has poor flexibility in implementing voice control.

In 101 of embodiments of the present disclosure, for example, after receiving the voice for searching for the terminal from a user, the terminal extracts voiceprint feature of the user from the voice, which is the target voiceprint feature.

In some embodiments, a mobile phone is used as an example. For example, a user prerecorded a target voice of "where are you, Xiaoou", and the target voice is used to search for the mobile phone. An operation corresponding to the target voice is to trigger the mobile phone to light its screen and output a ringtone to remind the user where the mobile phone is currently located, and thus it is easy for the user to find the mobile phone. For example, a function realized by the target voice may be referred to as function of searching mobile phones. In other words, when the user speaks out the voice of "Where are you? Xiaoou", the mobile phone will light its screen and output a ringtone simultaneously, so that the user can find the mobile phone as soon as possible according to the ringtone emitted by the mobile phone and the lighted screen.

After the target voice is set, when the user utters a certain voice, for example, when the user utters a voice such as "Where are you? Xiaoou", "Xiaoou, where are you?", or "where are you now? Xiaoou", the mobile phone analyzes these voices, and can determine that these voices are used by the user to search for the mobile phone. At this time, the mobile phone can extract a target voiceprint feature of the user from the received voice.

After extracting the target voiceprint feature of the user, the terminal may detect whether the target voiceprint feature matches with a preset voiceprint feature. In some embodiments, the preset voiceprint feature may be a voiceprint feature of an owner of the terminal, or a voiceprint feature of a user (such as the owner's family) who can use the terminal after permission of the owner.

If the target voiceprint feature matches with the preset voiceprint feature, the terminal may perform a corresponding operation.

If the target voiceprint feature does not match with the preset voiceprint feature, then action/operation at 102 is performed.

At 102, the method determines whether the target voiceprint feature meets a preset condition in relation to a preset voiceprint feature, in response to the target voiceprint feature unmatching with the preset voiceprint feature.

For example, if the terminal detects that the target voiceprint feature of the user does not match the preset voiceprint feature, then the terminal may determine whether the target voiceprint feature meets a preset condition in relation to the preset voiceprint feature.

If the target voiceprint feature does not meet the preset condition in relation to the preset voiceprint feature, the terminal may perform other operations.

If the target voiceprint feature meets the preset condition in relation to the preset voiceprint feature, then action/operation at 103 is performed.

At 103, the method detects whether the terminal is located at a preset location, in response to the target voiceprint feature meeting the preset condition in relation to the preset voiceprint feature.

For example, if the terminal detects that the target voiceprint feature of the user does not match with the preset voiceprint feature, but the target voiceprint feature meeting the preset condition in relation to the preset voiceprint feature, the terminal can determine whether the terminal is located at the preset location. For example, the preset location may be a user's home or company.

If it is determined that the terminal is not at the preset location, the terminal may perform other operations. If it is determined that the terminal is located at the preset location, then action/operation at 104 is performed.

At 104, the method triggers a location reminder in a preset manner for reminding a user where the terminal is, in response to the terminal being located at the preset location.

For example, the terminal determines that it is located at a preset location. In this case, the terminal may trigger a location reminder in the preset manner for reminding the user where the terminal is. For example, the terminal may output a ringtone and light its screen simultaneously to remind the user where the terminal is currently located, so that the user can easily find the terminal.

It can be understood that, in this embodiment, after receiving a voice for searching for the terminal, the terminal may detect whether the terminal is located at a preset location when a voiceprint feature included in the voice does not match with the preset voiceprint feature but the preset condition is met between both voiceprint feature. The terminal may remind the user where the terminal is in a preset manner in response to the terminal being located at a preset location. Therefore, compared to a case in which the terminal performs a corresponding operation only when the user's voiceprint feature matches with the preset voiceprint feature, this improves flexibility of the terminal when implementing voice control, because the terminal performs a corresponding operation when the user's voiceprint feature matches with the preset voiceprint feature and a certain condition is met in this embodiment.

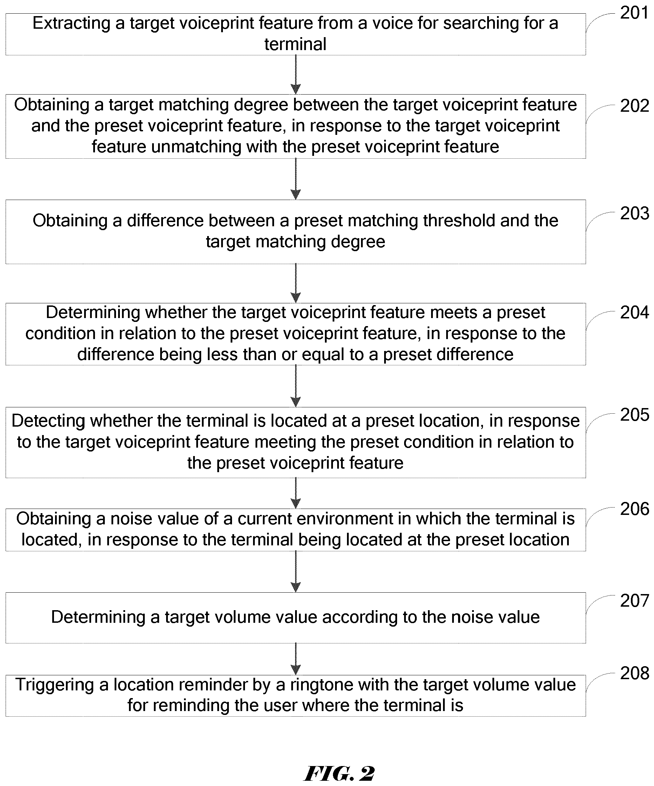

FIG. 2 is another schematic flowchart of a method for location reminder according to some embodiments of the present disclosure. The method may include actions/operations in the following.

At 201, the method extracts a target voiceprint feature from a voice for searching for a terminal after receiving the voice.

For example, a user pre-records a target voice of "where are you, Xiaoou", and the target voice is used to search for a mobile phone. An operation corresponding to the target voice is to trigger the mobile phone to light its screen and output a ringtone to remind the user where the mobile phone is currently located, and thus it is easy for the user to find the phone.

After receiving the voice of "Where are you? Xiaoou" from the user, the terminal may first extract the voiceprint feature of the user from the voice, which is the target voiceprint feature.

After extracting the target voiceprint feature of the user, the terminal may compare the target voiceprint feature with a preset voiceprint feature and then determine whether the target voiceprint feature matches with the preset voiceprint feature. In some embodiments, the preset voiceprint feature may be a voiceprint feature of an owner of the terminal, or a voiceprint feature of a user (such as the owner's family) who can use the terminal after permission of the owner.

For example, when comparing the target voiceprint feature with the preset voiceprint feature, the terminal can calculate a matching degree between the target voice feature and the preset voiceprint feature, and then the terminal can determine whether the matching degree reaches a preset matching threshold. If the matching degree reaches the preset matching threshold, it can be determined that the target voiceprint feature matches with the preset voiceprint feature. If the matching degree does not reach the preset matching threshold, it can be determined that the target voiceprint feature does not match with the preset voiceprint feature.

If it is detected that the target voiceprint feature matches with the preset voiceprint feature, then the terminal may perform an operation corresponding to the matching.

If it is detected that the target voiceprint feature does not match with the preset voiceprint feature, then an action/operation at 202 is performed.

At 202, the method obtains a target matching degree between the target voiceprint feature and the preset voiceprint feature, in response to the target voiceprint feature unmatching with the preset voiceprint feature.

At 203, the method obtains a difference between a preset matching threshold and the target matching degree.

At 204, the method determines whether the target voiceprint feature meets a preset condition in relation to the preset voiceprint feature, in response to the difference being less than or equal to a preset difference.

For example, actions/operations at 202, 203, and 204 includes the following.

The terminal detects that the target voiceprint feature of the user does not match with the preset voiceprint feature, and then the terminal may obtain the matching degree between the target voiceprint feature and the preset voiceprint feature, which is the target matching degree.

After acquiring the target matching degree, the terminal may acquire the difference between the target matching degree and a preset matching threshold.

For example, since the target voiceprint feature of the user does not match with the preset voiceprint feature, it can be determined that the target matching degree between the target voiceprint feature and the preset voiceprint feature is less than the preset matching threshold. In this case, the terminal may acquire the difference between the target matching degree and the preset matching threshold. For example, if the target matching degree between the user's target voiceprint feature and the preset voiceprint feature is 86%, and the preset matching threshold is 90%, then the difference between the target matching degree and the preset matching threshold is 4%.

After acquiring the difference between the target matching degree and the preset matching threshold, the terminal may detect whether the difference is less than or equal to a preset difference. For example, the preset difference may be 5%. Of course, the preset difference can also be other values, such as 6% or 8%, etc.

If it is detected that the difference between the target matching degree and the preset matching threshold is greater than the preset difference, for example, the target matching degree is 80%, the preset matching threshold is 90%, and the difference between the target matching degree and the preset matching threshold is 10% and greater than the preset matching threshold 5%, the voiceprint feature of the current user may be considered to be too different from the preset voiceprint feature, and the current user may be considered an illegal user. At this time, the terminal may refuse to perform a corresponding operation. For example, the terminal may not light its screen and output a ringtone. In addition, the terminal can also perform other operations for security protection to prevent the terminal from being illegally operated by the illegal user. For example, if it is detected that the current user is an illegal user, the terminal may start a camera to obtain a face image of the current user, and then upload the face image to a cloud server preset by the owner so that the owner can trace the illegal user. Alternatively, the terminal may hide icons of important applications, so that illegal users cannot operate these important applications.

If the difference between the target matching degree and the preset matching threshold is detected to be less than or equal to the preset difference, for example, the target matching degree is 86%, the preset matching threshold is 90%, and the difference is 4% and less than the preset matching threshold 5%, it can be considered that the target voiceprint feature of the current user is close to the preset voiceprint feature. In other words, the current user is likely to be a legal user, but due to a slight change in the voiceprint of the current user, it results in the low matching degree between the current user's target voiceprint feature and the preset voiceprint feature.

It should be noted that, a voiceprint feature is mainly determined by two factors. One of the two factors is a size of the sound cavity, including the throat, nasal cavity and oral cavity. A size of the vocal cord tension and a frequency range of sounds is determined by shapes, sizes and locations of these organs. The other of the two factors determining the voiceprint feature is a way in which vocal organs are manipulated. The vocal organs include lips, teeth, tongue, soft palate, and palate muscles, which works together to produce a clear voice. In other words, the voiceprint is closely related to the physiological characteristics of the human body. In daily life, for example, throat inflammation when the user gets cold will cause the user's voice to become hoarse, or the user's voiceprint will also change slightly when the user speaks while eating food. In these cases, since the user's voiceprint has changed, a matching degree between the user's voiceprint feature and a preset voiceprint feature may be slightly less than the preset matching threshold.

When detecting that the difference between the target matching degree (between the user's target voiceprint feature and the preset voiceprint feature) and the preset matching threshold is less than or equal to a preset difference, the terminal may determine that the target voiceprint feature meets the preset condition in relation to the preset voiceprint feature.

At 205, the method detects whether the terminal is located at a preset location, in response to the target voiceprint feature meeting the preset condition in relation to the preset voiceprint feature.

For example, when it is determined that the target voiceprint feature meets the preset condition in relation to the preset voiceprint feature, the terminal may detect whether the terminal is located at a preset location. In some embodiments, the preset location may be a commonly used location such as the user's home or company.

If it is detected that the terminal is not located at the preset location, the terminal can perform other operations.

If it is detected that the terminal is located at the preset location, then perform an action/operation at 206.

At 206, the method obtains a noise value of a current environment, in response to the terminal being located at the preset location.

At 207, the method determines a target volume value according to the noise value.

At 208, the method triggers a location reminder by a ringtone with the target volume value for reminding the user where the terminal is.

For example, actions/operations at 206, 207, and 208 may include the following.

The terminal detects that the terminal is located at a preset location, which means that the target voiceprint feature of the user closely matches with the preset voiceprint feature and the terminal is located at a preset location such as the user's home or company, the current user may be considered as an legal user. At this time, the terminal can remind the user where the terminal is in a preset manner so that the user can find the terminal.

For example, in this embodiment, when the terminal triggers a location reminder in a preset manner for reminding the user where the terminal is, it may first obtain the noise value of the current environment, and then determine a target volume value according to the noise value. Then the terminal triggers a location reminder by a ringtone with the target volume value for reminding the user where the terminal is, so that the user can find the terminal.

In some embodiments, the larger the noise value is, the larger the target volume value is.

In some embodiments, after triggering a location reminder by a ringtone with the target volume value for reminding the user where the terminal is, the method further includes the following.

The method increases the target volume value of the ringtone, in response to the terminal being not found by the user after a preset duration.

And the method continuously triggers the location reminder by the ringtone with the increased target volume value for reminding the user where the terminal is.

For example, after triggering a location reminder by a ringtone with the target volume value for reminding the user where the terminal is, if the terminal detects that the user has not yet found the terminal after a preset time period, the terminal may increase the target volume value of the ringtone, and then continuously triggers the location reminder by the ringtone with the increased target volume value for reminding the user where the terminal is. Thus, the user can find the terminal more quickly.

In another some embodiments, before triggering a location reminder by a ringtone with the target volume value for reminding the user where the terminal is, the method further includes the following.

The method obtains a noise value of a current environment.

And the method obtains a volume value of the received voice for searching for the terminal, in response to the noise value being less than a preset threshold.

Then, when it is necessary to trigger a location reminder in a preset manner for reminding the user where the terminal is, the following process may be performed. The terminal triggers the location reminder by a ringtone with a volume value of the voice for reminding the user where the terminal is.

For example, when it is determined that the target voiceprint feature meets a preset condition in relation to a preset voiceprint feature and the terminal is located at the preset location, the terminal needs to trigger a location reminder in a preset manner for reminding the user where the terminal is. At this time, the terminal may first obtain a noise value of the current environment. If it is detected that the noise value is less than a preset threshold, then the current environment may be regarded as a quiet environment. At this time, the terminal may acquire a volume value of the received voice for searching for the terminal. Then, the terminal may trigger the location reminder by a ringtone with the volume value for reminding the user where the terminal is.

It can be understood that, in a quiet environment, in order to avoid disturbing other people with excessive voice volume, the user will lower the sound to issue a voice for searching a terminal at a lower volume. In this case, the terminal may output a ringtone according to the received volume value of the voice used for searching the terminal to remind the user where the terminal is. That is, the terminal can output a ringtone with the user's volume. This avoids excessive ringtone to interfere with other users in the current environment.

In some embodiments, when it is necessary to detect whether the terminal is located at a preset location, the terminal can perform positioning detection. For example, the terminal may obtain positioning information, and then detect whether the positioning information is information of the preset location. If the positioning information is information of the preset location, it can be determined that the terminal is located at the preset location. If the positioning information is not information of the preset location, it can be determined that the terminal is not located at the preset location.

Alternatively, the terminal may also determine whether it is located at a preset location through a WiFi access point to which the terminal is currently connected. For example, the preset location is the user's home or company, and generally there are WiFi access points at these locations. The terminal may firstly record information of WiFi access points at these preset locations respectively, and determine a respective one as information of a preset WiFi access point. Then, when it is necessary to determine whether the terminal is located at a preset location, the terminal may also firstly obtain information of a WiFi access point to which the terminal is currently connected. If the information of the WiFi access point to which the terminal is currently connected is detected as information of the preset WiFi access point, it can be determined that the terminal is currently located at a preset location.

In yet another some embodiments, the terminal may comprehensively determine whether the terminal is currently located at a preset location combined with positioning information and information of a WiFi access point.

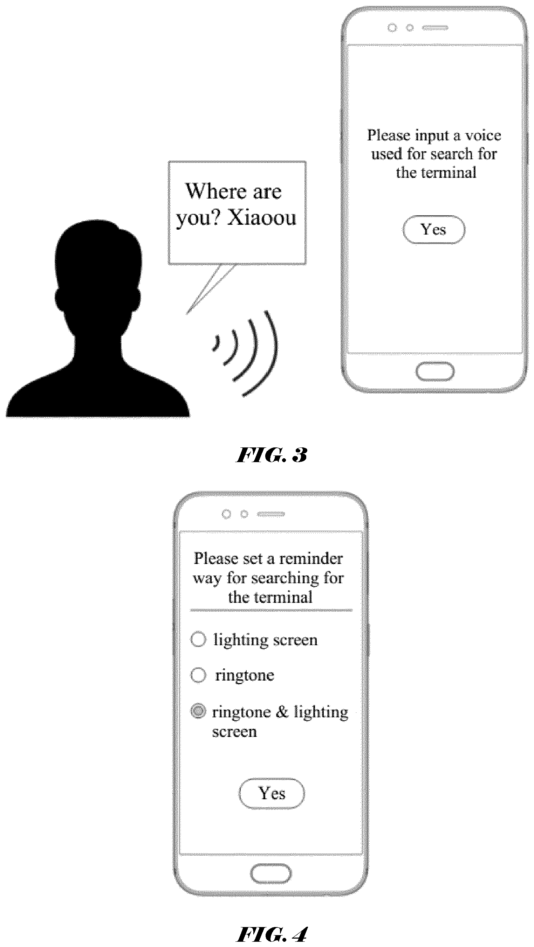

FIG. 3 to FIG. 5 are schematic diagrams of scenarios for a method for location reminder according to some embodiments of the present disclosure.

For example, as shown in FIG. 3, the terminal prompts a user to input a voice used for search for the terminal. For example, a voice input by the user is "Where are you? Xiaoou". That is, after the user utters the voice of "Where are you? Xiaoou", when the terminal receives the voice, it will trigger the terminal to implement a function of searching for the terminal if the user is a legal user.

Then, as shown in FIG. 4, the terminal prompts the user to set a reminder way for searching for the terminal, for example, the user selects a reminder way of "ringtone and lighting screen". That is, when a voice for searching for a terminal issued by a legal user is received, the terminal may use a lighted screen and ringtone to remind the user where the terminal is currently located.

For example, the user currently gets cold and causes inflammation of the throat, and the user issues a hoarse voice. That is, a slight change occurs in the user's voiceprint feature.

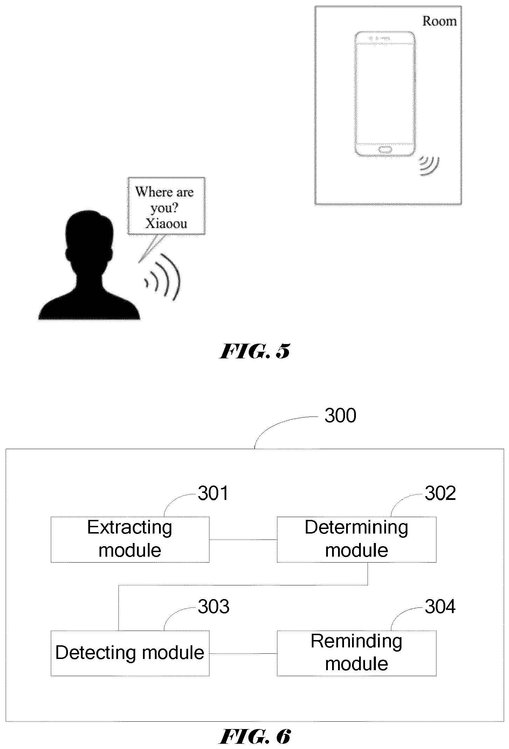

For example, now the user is in the living room at home, the user needs to use the terminal, but the terminal is not at the user's side but in another room, and the user cannot find the terminal for a while. In this case, the user utters the voice of "Where are you? Xiaoou" to find the terminal, as shown in FIG. 5.

The voice is transmitted to the room, and after receiving the voice, the terminal parses the voice to determine that the voice is used for searching for the terminal. At this time, the terminal can extract a target voiceprint feature of the user from the voice.

Then, the terminal may compare the target voiceprint feature with a preset voiceprint feature of the owner, and obtain a target matching degree between the target voiceprint feature and the preset voiceprint feature. Then, the terminal may detect whether the target matching degree reaches a preset matching threshold to determine whether the target voiceprint feature matches with the preset voiceprint feature. For example, in this embodiment, the terminal determines that the target matching degree between the target voiceprint feature and the preset voiceprint feature is less than the preset matching threshold.

At this time, the terminal may further obtain a difference between the target matching degree and a preset matching threshold. For example, the target matching degree is 86%, the preset matching threshold is 90%, and the difference is 4%. Then, the terminal may detect whether the difference is less than or equal to a preset difference. For example, the preset difference is 5%.

As 4% is less than 5%, the terminal can determine that the target voiceprint feature is close to the preset voiceprint feature, and a preset condition is met between the target voiceprint feature and the preset voiceprint feature. In this case, the terminal may acquire current positioning information of the terminal, and determine whether the terminal is at a preset location according to the positioning information. For example, the preset location is the owner's home or company.

For example, in this embodiment, the terminal detects that it is currently in the owner's home. In this case, the terminal may trigger the function of searching for the terminal. That is, the terminal may use a bright screen and a ringtone simultaneously to remind the current user where the terminal is currently located.

For example, in this embodiment, the terminal may first obtain the noise value of the current environment, then determine a target volume value according to the noise value, and then trigger a location reminder by a ringtone with the target volume value and by using a lighted screen for reminding the user where the terminal is.

After hearing the ringtone from the terminal, the user can follow the ringtone to find the terminal in the room.

FIG. 6 is a schematic structural view of an apparatus for location reminder according to some embodiments of the present disclosure. The apparatus 300 includes an extracting module 301, a determining module 302, a detecting module 303, and a reminding module 304.

The extracting module 301 is configured for extracting a target voiceprint feature from a voice configured for searching for a terminal after receiving the voice.

The determining module 302 is configured for determining whether the target voiceprint feature meets a preset condition in relation to a preset voiceprint feature, in response to the target voiceprint feature unmatching with the preset voiceprint feature;

The detecting module 303 is configured for detecting whether the terminal is located at a preset location in response to the target voiceprint feature meeting the preset condition in relation to the preset voiceprint feature.

The reminding module 304 is configured for triggering a location reminder in a preset manner for reminding a user where the terminal is, in response to the terminal being located at the preset location.

In some embodiments, the determining module 302 is configured for:
obtaining a target matching degree between the target voiceprint feature and the preset voiceprint feature;
obtaining a difference between the target matching degree and a preset matching threshold;
determining the target voiceprint feature meets the preset condition in relation to the preset voiceprint feature, in response to the difference being less than or equal to a preset difference; and
determining the target voiceprint feature does not meet the preset condition in relation to the preset voiceprint feature, in response to the difference being greater than the preset difference.

In some embodiments, the detecting module 303 is configured for:
obtaining information of a WiFi access point to which the terminal is currently connected; and
determining whether the information of the WiFi access point is information of a preset WiFi access point, and determining that the terminal is located at the preset location, in response the information of the WiFi access point being the information of the preset WiFi access point, wherein the information of the preset WiFi access point being information of aWiFi access point at the preset location.

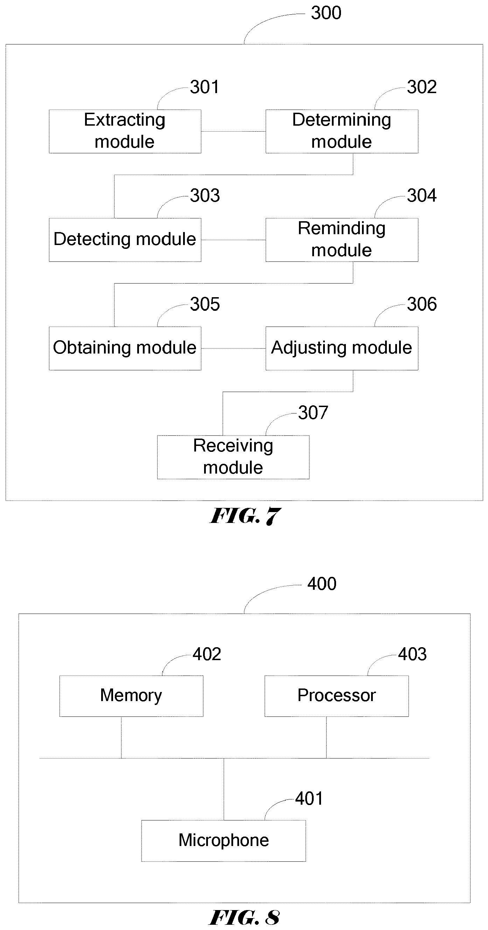

FIG. 7 is another schematic structural view of an apparatus for location reminder according to some embodiments of the present disclosure. In some embodiments, the apparatus further includes an obtaining module 305, an adjusting module 306, and a receiving module 307.

The obtaining module 305 is configured for obtaining a noise value of a current environment; and determining a target volume value according to the noise value.

Then, the reminding module 304 is configured for triggering the location reminder by a ringtone with the target volume value for reminding the user where the terminal is.

In some embodiments, the larger the noise value of the current environment is, the larger the target volume value is.

The adjusting module 306 is configured for increasing the target volume value of the ringtone, in response to the terminal not being found by the user after a preset duration; and continuously triggering the location reminder by the ringtone with the increased target volume value for reminding the user where the terminal is.

The receiving module 307 is configured for obtaining a noise value of a current environment; and obtaining a volume value of the voice, in response to the noise value is less than a preset threshold

Then, the reminding module 304 is configured for continuously triggering the location reminder by a ringtone with the volume value for reminding the user where the terminal is.

Embodiments of the present disclosure provides a storage medium storing a computer program, when executed on a computer, causing the computer to perform actions/operations in the above method.

Embodiments of the present disclosure further provides an electronic device comprising a memory and a processor, wherein the processor calls a computer program stored in the memory to perform actions/operations in the above method according to embodiments of the present disclosure.

For example, the electronic device may be a mobile terminal such as a tablet computer or a smart phone. FIG. 8 is a structural view of an electronic device according to some embodiments of the present disclosure.

The electronic device 400 includes a microphone 401, a memory 402, a processor 403 and the like. It may be understood by those skilled in the art that a structure of the electronic device shown in FIG. 8 does not constitute a limitation to the electronic device, and may include more or fewer components than what is shown, or combinations of some components, or different component arrangements.

The microphone 401 is configured for picking up voices spoked by the user.

The memory 402 is used to store application programs and data. The application programs stored in the memory 402 contains executable codes. The application programs may be formed as various functional modules. The processor 403 implements various function applications and data processing by executing the application programs stored in the memory 402.

The processor 403 is a control center of the electronic device, and is configured to be connected all parts of the electronic device via various interfaces and lines. Various functions and data processing of the electronic device may be implemented by running or executing the application programs stored in the memory 402 and calling data stored in the memory 402. Thus, the electronic device may be monitored wholly.

In this embodiment, the processor 403 in the electronic device loads the executable codes corresponding to one or more process of the application programs into the memory 402, and the application programs stored in the memory 402 are executed by the processor 403 such that the following actions/operations may be implemented.

Extracting a target voiceprint feature from a voice configured for searching for a terminal after receiving the voice.

Determining whether the target voiceprint feature meets a preset condition in relation to a preset voiceprint feature, in response to the target voiceprint feature unmatching with the preset voiceprint feature.

Detecting whether the terminal is located at a preset location in response to the target voiceprint feature meeting the preset condition in relation to the preset voiceprint feature.

And triggering a location reminder in a preset manner for reminding a user where the terminal is, in response to the terminal being located at the preset location.

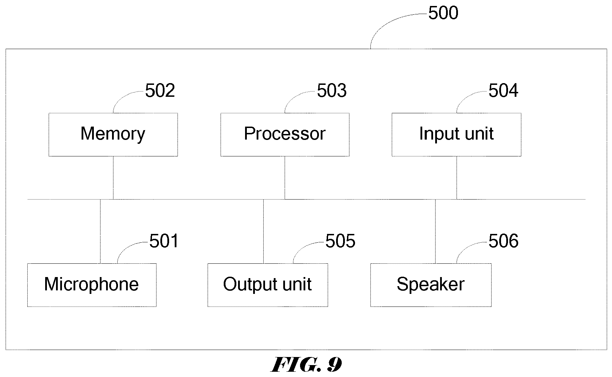

As shown in FIG. 9, a mobile terminal 500 includes a microphone 501, a memory 502, a processor 503, an input unit 504, an output unit 505, a speaker 506, and the like.

The microphone 501 is configured for picking up voices spoked by the user.

The memory 502 is used to store application programs and data. The application programs stored in the memory 502 contains executable codes. The application programs may be formed as various functional modules. The processor 503 implements various function applications and data processing by executing the application programs stored in the memory 502.

The processor 503 is a control center of the electronic device, and is configured to be connected all parts of the electronic device via various interfaces and lines. Various functions and data processing of the electronic device may be implemented by running or executing the application programs stored in the memory 502 and calling data stored in the memory 502. Thus, the electronic device may be monitored wholly.

The input unit 504 is used for receiving inputted numbers, character information, or user characteristic information (such as fingerprints), and generating input signals of a keyboard, a mouse, a joystick, an optical or trackball related to user settings and function control.

The output unit 505 is used for displaying information input by the user or information provided to the user and various graphical user interfaces of the mobile terminal. These graphical user interfaces may include graphics, texts, icons, videos, and any combination thereof. The output unit may include a display panel.

In this embodiment, the processor 503 in the electronic device loads the executable codes corresponding to one or more process of the application programs into the memory 502, and the application programs stored in the memory 502 are executed by the processor 503 such that the following actions/operations may be implemented.

Extracting a target voiceprint feature from a voice configured for searching for a terminal after receiving the voice.

Determining whether the target voiceprint feature meets a preset condition in relation to a preset voiceprint feature, in response to the target voiceprint feature unmatching with the preset voiceprint feature.

Detecting whether the terminal is located at a preset location in response to the target voiceprint feature meeting the preset condition in relation to the preset voiceprint feature.

And triggering a location reminder in a preset manner for reminding a user where the terminal is, in response to the terminal being located at the preset location.

In some embodiments, before the triggering a location reminder in a preset manner for reminding a user where the terminal is, the processor 503 further performs obtaining a noise value of a current environment; and determining a target volume value according to the noise value.

Then, as performing the triggering a location reminder in a preset manner for reminding a user where the terminal is, the processor 503 performs triggering the location reminder by a ringtone with the target volume value for reminding the user where the terminal is.

In some embodiments, after the triggering the location reminder by a ringtone with the target volume value, the processor 503 further performs increasing the target volume value of the ringtone, in response to the terminal not being found by the user after a preset duration; and continuously triggering the location reminder by the ringtone with the increased target volume value for reminding the user where the terminal is.

In some embodiments, before the triggering a location reminder in a preset manner for reminding a user where the terminal is, the processor 503 further performs obtaining a noise value of a current environment; and obtaining a volume value of the voice, in response to the noise value is less than a preset threshold.

Then, as performing the triggering a location reminder in a preset manner for reminding a user where the terminal is, the processor 503 performs continuously triggering the location reminder by a ringtone with the volume value for reminding the user where the terminal is.

In some embodiments, as performing the determining whether the target voiceprint feature meets a preset condition in relation to a preset voiceprint feature, the processor 503 further performs obtaining a target matching degree between the target voiceprint feature and the preset voiceprint feature; obtaining a difference between the target matching degree and a preset matching threshold; determining the target voiceprint feature meets the preset condition in relation to the preset voiceprint feature, in response to the difference being less than or equal to a preset difference; and determining the target voiceprint feature does not meet the preset condition in relation to the preset voiceprint feature, in response to the difference being greater than the preset difference.

In some embodiments, the larger the noise value of the current environment is, the larger the target volume value is.

In some embodiments, as performing the determining whether the terminal is located at a preset location, the processor 503 further performs obtaining information of a WiFi access point to which the terminal is currently connected; determining whether the information of the WiFi access point is information of a preset WiFi access point, wherein the information of the preset WiFi access point being information of aWiFi access point at the preset location; and determining that the terminal is located at the preset location, in response the information of the WiFi access point being the information of the preset WiFi access point.

In the foregoing embodiments, the descriptions of the various embodiments are different, and the detailed descriptions for some embodiments may be referred from the detailed description of the above methods for image-processing, which are not described herein.

The apparatus for location reminder according to embodiments of the present disclosure belongs to the same concept as the method for location reminder in the above embodiments. Any method, whose implementation processes are described in the methods for location reminder in the above embodiments, may be run on the apparatus for image-processing, which will not described herein again.

It should be noted that, for the method of location reminder in the embodiments of the present disclosure, those skilled in the art can understand that all or part of a process of implementing the method for location reminder in the embodiments of the present disclosure is implemented through controlling related hardware by computer programs. The computer programs can be stored in a computer readable storage medium, such as a memory, and executed by at least one processor. The computer programs can include an implementation of the method for location reminder as described during the execution. The storage medium may be a magnetic disk, an optical disk, a read only memory (ROM), a random access memory (RAM), or the like.

For the apparatus for location reminder of embodiments of the present disclosure, each functional module may be integrated into one processing chip, or each module may exist physically separately, or two or more modules may be integrated into one module. The above integrated modules can be implemented in the form of hardware or in the form of software functional modules. The integrated module, if implemented in the form of a software functional module and sold or used as a standalone product, may also be stored in a computer readable storage medium, such as a read only memory, a magnetic disk or an optical disk, etc.

The method for location reminder and the electronic device in embodiments of the present disclosure are described in detail. The principles and implementations of the present disclosure are described with examples. The description of the above embodiments is only used to help understand a method and a core idea of the present disclosure. Meanwhile, for those skilled in the art, there will be changes in specific embodiments and disclosure scopes according to the idea of the present disclosure. The descriptions should not be construed to limit the present disclosure.

The scope of the invention is defined in the claims.

## Claims

1. A method for location reminder, comprising:
extracting (101, 201), by a processor of an electronic device, a target voiceprint feature from a voice configured for searching for a terminal, after receiving the voice;
the method **characterized by** comprising:
determining (102, 204), by the processor, whether the target voiceprint feature meets a preset condition in relation to a preset voiceprint feature, in response to the target voiceprint feature unmatching with the preset voiceprint feature;
detecting (103, 205), by the processor, whether the terminal is located at a preset location in response to the target voiceprint feature meeting the preset condition in relation to the preset voiceprint feature; and
triggering (104), by the processor, a location reminder in a preset manner for reminding a user where the terminal is, in response to the terminal being located at the preset location.

2. The method as claimed in claim 1, before the triggering (104), by the processor, a location reminder in a preset manner for reminding a user where the terminal is, further comprising:
obtaining (206), by the processor, a noise value of a current environment; and
determining (207), by the processor, a target volume value according to the noise value;
wherein the triggering (104), by the processor, a location reminder in a preset manner for reminding a user where the terminal is comprises:
triggering (208), by the processor, the location reminder by a ringtone with the target volume value for reminding the user where the terminal is.

3. The method as claimed in claim 2, after the triggering (104), by the processor, the location reminder by a ringtone with the target volume value, further comprising:
increasing, by the processor, the target volume value of the ringtone, in response to the terminal not being found by the user after a preset duration; and
continuously triggering, by the processor, the location reminder by the ringtone with the increased target volume value for reminding the user where the terminal is.

4. The method as claimed in claim 1, before the triggering (104), by the processor, a location reminder in a preset manner for reminding a user where the terminal is, further comprising:
obtaining, by the processor, a noise value of a current environment; and
obtaining, by the processor, a volume value of the voice, in response to the noise value is less than a preset threshold;
wherein the triggering (104), by the processor, a location reminder in a preset manner for reminding a user where the terminal is comprises:
continuously triggering, by the processor, the location reminder by a ringtone with the volume value for reminding the user where the terminal is.

5. The method as claimed in claim 1, wherein the determining (102), by the processor, whether the target voiceprint feature meets a preset condition in relation to a preset voiceprint feature comprises:
obtaining (202), by the processor, a target matching degree between the target voiceprint feature and the preset voiceprint feature;
obtaining (203), by the processor, a difference between the target matching degree and a preset matching threshold;
determining (204), by the processor, the target voiceprint feature meets the preset condition in relation to the preset voiceprint feature, in response to the difference being less than or equal to a preset difference; and
determining, by the processor, the target voiceprint feature does not meet the preset condition in relation to the preset voiceprint feature, in response to the difference being greater than the preset difference.

6. The method as claimed in claim 2, wherein the larger the noise value of the current environment is, the larger the target volume value is.

7. The method as claimed in claim 1, wherein the determining (103), by the processor, whether the terminal is located at a preset location comprises:
obtaining, by the processor, information of a WiFi access point to which the terminal is currently connected;
determining, by the processor, whether the information of the WiFi access point is information of a preset WiFi access point, wherein the information of the preset WiFi access point being information of any of at least one WiFi access point at the preset location; and
determining, by the processor, that the terminal is located at the preset location, in response the information of the WiFi access point being the information of the preset WiFi access point.

8. An apparatus (300) for location reminder, comprising:
an extracting module (301), configured for extracting a target voiceprint feature from a voice configured for searching for a terminal, after receiving the voice; the apparatus **characterized by** comprising:
a determining module (302), configured for determining whether the target voiceprint feature meets a preset condition in relation to a preset voiceprint feature, in response to the target voiceprint feature unmatching with the preset voiceprint feature;
a detecting module (303), configured for detecting whether the terminal is located at a preset location in response to the target voiceprint feature meeting the preset condition in relation to the preset voiceprint feature; and
a reminding module (304), configured for triggering a location reminder in a preset manner for reminding a user where the terminal is, in response to the terminal being located at the preset location.

9. The apparatus as claimed in claim 8, further comprising:
an obtaining module (305), configured for obtaining a noise value of a current environment and determining a target volume value according to the noise value;
wherein the reminding module (304) is configured for triggering the location reminder by a ringtone with the target volume value for reminding the user where the terminal is.

10. The apparatus as claimed in claim 9, further comprising an adjusting module (306), configured for:
increasing the target volume value of the ringtone, in response to the terminal not being found by the user after a preset duration; and
continuously triggering the location reminder by the ringtone with the increased target volume value for reminding the user where the terminal is.

11. The apparatus as claimed in claim 8, wherein the determining module (302) is configured for:
obtaining a target matching degree between the target voiceprint feature and the preset voiceprint feature;
obtaining a difference between the target matching degree and a preset matching threshold;
determining the target voiceprint feature meets the preset condition in relation to the preset voiceprint feature, in response to the difference being less than or equal to a preset difference; and
determining the target voiceprint feature does not meet the preset condition in relation to the preset voiceprint feature, in response to the difference being greater than the preset difference.

12. The apparatus as claimed in claim 9, wherein the larger the noise value of the current environment is, the larger the target volume value is.

13. An electronic device (400, 500), comprising a memory (402, 502) and a processor (403, 503), wherein the processor (403, 503) is configured for executing a computer program stored in the memory (402, 502) to perform a method of any one of claims 1 to 7.

## Patentansprüche

1. Verfahren für eine Standorterinnerung, umfassend:
Extrahieren (101, 201), durch einen Prozessor einer elektronischen Vorrichtung, eines Zielstimmabdruckmerkmals aus einer Stimme, die konfiguriert ist zum Suchen nach einem Endgerät, nachdem die Stimme empfangen wurde;
wobei das Verfahren **dadurch gekennzeichnet ist, dass** es umfasst:
Ermitteln (102, 204), durch den Prozessor, ob das Zielstimmabdruckmerkmal eine voreingestellte Bedingung in Bezug auf ein voreingestelltes Stimmabdruckmerkmal erfüllt, als Reaktion darauf, dass das Zielstimmabdruckmerkmal nicht mit dem voreingestellten Stimmabdruckmerkmal übereinstimmt;
Erkennen (103, 205), durch den Prozessor, ob sich das Endgerät an einem voreingestellten Standort befindet, als Reaktion darauf, dass das Zielstimmabdruckmerkmal die voreingestellte Bedingung in Bezug auf das voreingestellte Stimmabdruckmerkmal erfüllt; und
Auslösen (104), durch den Prozessor, einer Standorterinnerung in einer voreingestellten Weise, um einen Benutzer daran zu erinnern, wo sich das Endgerät befindet, als Reaktion darauf, dass sich das Endgerät an dem voreingestellten Standort befindet.

2. Verfahren nach Anspruch 1, das vor dem Auslösen (104), durch den Prozessor, einer Standorterinnerung in einer voreingestellten Weise, um einen Benutzer daran zu erinnern, wo sich das Endgerät befindet, außerdem umfasst:
Erhalten (206), in dem Prozessor, eines Rauschwerts einer aktuellen Umgebung; und
Ermitteln (207), durch den Prozessor, eines Ziellautstärkewerts gemäß dem Rauschwert;
wobei das Auslösen (104), durch den Prozessor, einer Standorterinnerung in einer voreingestellten Weise, um einen Benutzer daran zu erinnern, wo sich das Endgerät befindet, umfasst:
Auslösen (208), durch den Prozessor, der Standorterinnerung durch einen Klingelton mit dem Ziellautstärkewert, um den Benutzer daran zu erinnern, wo sich das Endgerät befindet.

3. Verfahren nach Anspruch 2, das nach dem Auslösen (104), durch den Prozessor, der Standorterinnerung durch einen Klingelton mit dem Ziellautstärkewert außerdem umfasst:
Erhöhen, durch den Prozessor, des Ziellautstärkewerts des Klingeltons, als Reaktion darauf, dass das Endgerät nach einer voreingestellten Zeitdauer nicht von dem Benutzer gefunden wurde; und
kontinuierliches Auslösen, durch den Prozessor, der Standorterinnerung durch den Klingelton mit dem erhöhten Ziellautstärkewert, um den Benutzer daran zu erinnern, wo sich das Endgerät befindet.

4. Verfahren nach Anspruch 1, das vor dem Auslösen (104), durch den Prozessor, einer Standorterinnerung in einer voreingestellten Weise, um einen Benutzer daran zu erinnern, wo sich das Endgerät befindet, außerdem umfasst:
Erhalten, in dem Prozessor, eines Rauschwerts einer aktuellen Umgebung; und
Erhalten, in dem Prozessor, eines Lautstärkewerts der Stimme, als Reaktion darauf, dass der Rauschwert geringer als ein voreingestellter Schwellenwert ist;
wobei das Auslösen (104), durch den Prozessor, einer Standorterinnerung in einer voreingestellten Weise, um einen Benutzer daran zu erinnern, wo sich das Endgerät befindet, umfasst:
kontinuierliches Auslösen, durch den Prozessor, der Standorterinnerung durch einen Klingelton mit dem Lautstärkewert, um den Benutzer daran zu erinnern, wo sich das Endgerät befindet.

5. Verfahren nach Anspruch 1, wobei das Ermitteln (102), durch den Prozessor, ob das Zielstimmabdruckmerkmal eine voreingestellte Bedingung in Bezug auf ein voreingestelltes Stimmabdruckmerkmal erfüllt, umfasst:
Erhalten (202), in dem Prozessor, eines Zielübereinstimmungsgrads zwischen dem Zielstimmabdruckmerkmal und dem voreingestellten Stimmabdruckmerkmal;
Erhalten (203), in dem Prozessor, einer Differenz zwischen dem Zielübereinstimmungsgrad und einem voreingestellten Übereinstimmungsschwellenwert;
Ermitteln (204), durch den Prozessor, dass das Zielstimmabdruckmerkmal die voreingestellte Bedingung in Bezug auf das voreingestellte Stimmabdruckmerkmal erfüllt, als Reaktion darauf, dass die Differenz kleiner als eine, oder gleich einer voreingestellten Differenz ist; und
Ermitteln, durch den Prozessor, dass das Zielstimmabdruckmerkmal eine voreingestellte Bedingung in Bezug auf das voreingestellte Stimmabdruckmerkmal nicht erfüllt, als Reaktion darauf, dass die Differenz größer als die voreingestellte Differenz ist.

6. Verfahren nach Anspruch 2, wobei je größer der Rauschwert der aktuellen Umgebung ist, umso größer ist der Ziellautstärkewert.

7. Verfahren nach Anspruch 1, wobei das Ermitteln (103), durch den Prozessor, ob sich das Endgerät an einem voreingestellten Standort befindet, umfasst:
Erhalten, in dem Prozessor, von Informationen über einen WiFi-Zugangspunkt, mit dem das Endgerät aktuell verbunden ist;
Ermitteln, durch den Prozessor, ob die Informationen über den WiFi-Zugangspunkt Informationen eines voreingestellten WiFi-Zugangspunkts sind, wobei die Informationen des voreingestellten WiFi-Zugangspunkts Informationen von jedem von mindestens einem WiFi-Zugangspunkt an dem voreingestellten Standort sind; und
Ermitteln, durch den Prozessor, dass sich das Endgerät an dem voreingestellten Standort befindet, als Reaktion darauf, dass die Informationen über den WiFi-Zugangspunkt die Informationen des voreingestellten WiFi-Zugangspunkts sind.

8. Einrichtung (300) für eine Standorterinnerung, umfassend:
ein Extraktionsmodul (301), das konfiguriert ist zum Extrahieren eines Zielstimmabdruckmerkmals aus einer Stimme, die konfiguriert ist zum Suchen nach einem Endgerät, nachdem die Stimme empfangen wurde; wobei die Einrichtung **dadurch gekennzeichnet ist, dass** sie umfasst:
ein Ermittlungsmodul (302), das konfiguriert ist zum Ermitteln, ob das Zielstimmabdruckmerkmal eine voreingestellte Bedingung in Bezug auf ein voreingestelltes Stimmabdruckmerkmal erfüllt, als Reaktion darauf, dass das Zielstimmabdruckmerkmal nicht mit dem voreingestellten Stimmabdruckmerkmal übereinstimmt;
ein Erkennungsmodul (303), das konfiguriert ist zum Erkennen, ob sich das Endgerät an einem voreingestellten Standort befindet, als Reaktion darauf, dass das Zielstimmabdruckmerkmal die voreingestellte Bedingung in Bezug auf das voreingestellte Stimmabdruckmerkmal erfüllt; und
ein Erinnerungsmodul (304), das konfiguriert ist zum Auslösen einer Standorterinnerung in einer voreingestellten Weise, um einen Benutzer daran zu erinnern, wo sich das Endgerät befindet, als Reaktion darauf, dass sich das Endgerät an dem voreingestellten Standort befindet.

9. Einrichtung nach Anspruch 8, das außerdem umfasst:
ein Empfangsmodul (305), das konfiguriert ist zum Erhalten eines Rauschwerts einer aktuellen Umgebung und zum Ermitteln eines Ziellautstärkewerts gemäß dem Rauschwert;
wobei das Erinnerungsmodul (304) konfiguriert ist zum Auslösen der Standorterinnerung durch einen Klingelton mit dem Ziellautstärkewert, um den Benutzer daran zu erinnern, wo sich das Endgerät befindet.

10. Einrichtung nach Anspruch 9, die außerdem ein Anpassungsmodul (306) umfasst, das konfiguriert ist zum:
Erhöhen des Ziellautstärkewerts des Klingeltons, als Reaktion darauf, dass das Endgerät nach einer voreingestellten Zeitdauer nicht von dem Benutzer gefunden wurde; und
kontinuierliches Auslösen der Standorterinnerung durch den Klingelton mit dem erhöhten Ziellautstärkewert, um den Benutzer daran zu erinnern, wo sich das Endgerät befindet.

11. Einrichtung nach Anspruch 8, wobei das Ermittlungsmodul (302) konfiguriert ist zum:
Erhalten eines Zielübereinstimmungsgrads zwischen dem Zielstimmabdruckmerkmal und dem voreingestellten Stimmabdruckmerkmal;
Erhalten einer Differenz zwischen dem Zielübereinstimmungsgrad und einem voreingestellten Übereinstimmungsschwellenwert;
Ermitteln, dass das Zielstimmabdruckmerkmal die voreingestellte Bedingung in Bezug auf das voreingestellte Stimmabdruckmerkmal erfüllt, als Reaktion darauf, dass die Differenz kleiner als eine, oder gleich einer voreingestellten Differenz ist; und
Ermitteln, dass das Zielstimmabdruckmerkmal die voreingestellte Bedingung in Bezug auf das voreingestellte Stimmabdruckmerkmal nicht erfüllt, als Reaktion darauf, dass die Differenz größer als die voreingestellte Differenz ist.

12. Einrichtung nach Anspruch 9, wobei je größer der Rauschwert der aktuellen Umgebung ist, umso größer ist der Ziellautstärkewert.

13. Elektronische Vorrichtung (400, 500), die einen Speicher (402, 502) und einen Prozessor (403, 503) umfasst, wobei der Prozessor (403, 503) konfiguriert ist zum Ausführen eines Computerprogramms, das in dem Speicher (402, 502) gespeichert ist, um ein Verfahren nach einem der Ansprüche 1 bis 7 durchzuführen.

## Revendications

1. Procédé de rappel d'emplacement, comprenant :
l'extraction (101, 201), par un processeur d'un appareil électronique, d'une caractéristique d'empreinte vocale cible d'une voix configurée pour la recherche d'un terminal, après réception de la voix ;
le procédé étant **caractérisé en ce qu'**il comprend :
la détermination (102, 204), par le processeur, que la caractéristique d'empreinte vocale cible satisfait ou non une condition prédéfinie relative à une caractéristique d'empreinte vocale prédéfinie, quand la caractéristique d'empreinte vocale cible ne correspond pas à la caractéristique d'empreinte vocale prédéfinie ;
la détection (103, 205), par le processeur, que le terminal est situé ou non à un emplacement prédéfini quand la caractéristique d'empreinte vocale cible satisfait la condition prédéfinie relative à la caractéristique d'empreinte vocale prédéfinie ; et
le déclenchement (104), par le processeur, d'un rappel d'emplacement d'une manière prédéfinie pour rappeler à un utilisateur où se trouve le terminal, quand le terminal est situé à l'emplacement prédéfini.

2. Procédé selon la revendication 1, comprenant en outre, avant le déclenchement (104), par le processeur, d'un rappel d'emplacement d'une manière prédéfinie pour rappeler à l'utilisateur où se trouve le terminal :
l'obtention (206), par le processeur, d'une valeur de bruit d'un environnement actuel ; et
la détermination (207), par le processeur, d'une valeur de volume cible en fonction de la valeur de bruit ;
dans lequel le déclenchement (104), par le processeur, d'un rappel d'emplacement d'une manière prédéfinie pour rappeler à un utilisateur où se trouve le terminal comprend :
le déclenchement (208), par le processeur, du rappel d'emplacement par une sonnerie avec la valeur de volume cible pour rappeler à l'utilisateur où se trouve le terminal.

3. Procédé selon la revendication 2, comprenant en outre, après le déclenchement (104), par le processeur, du rappel d'emplacement par une sonnerie avec la valeur de volume cible :
l'augmentation, par le processeur, de la valeur de volume cible de la sonnerie, quand l'utilisateur n'a pas trouvé le terminal après une durée prédéfinie ; et
le déclenchement en continu, par le processeur, du rappel d'emplacement par la sonnerie avec la valeur de volume cible augmentée pour rappeler à l'utilisateur où se trouve le terminal.

4. Procédé selon la revendication 1, comprenant en outre, avant le déclenchement (104), par le processeur, d'un rappel d'emplacement d'une manière prédéfinie pour rappeler à l'utilisateur où se trouve le terminal :
l'obtention, par le processeur, d'une valeur de bruit d'un environnement actuel ; et
l'obtention, par le processeur, d'une valeur de volume de la voix, quand la valeur de bruit est inférieure à un seuil prédéfini ;
dans lequel le déclenchement (104), par le processeur, d'un rappel d'emplacement d'une manière prédéfinie pour rappeler à un utilisateur où se trouve le terminal comprend :
le déclenchement en continu, par le processeur, du rappel d'emplacement par une sonnerie avec la valeur de volume pour rappeler à l'utilisateur où se trouve le terminal.

5. Procédé selon la revendication 1, dans lequel la détermination (102) par le procédé que la caractéristique d'empreinte vocale cible satisfait une condition prédéfinie relative à une caractéristique d'empreinte vocale prédéfinie comprend :
l'obtention (202), par le processeur, d'un degré de correspondance cible entre la caractéristique d'empreinte vocale cible et la caractéristique d'empreinte vocale prédéfinie ;
l'obtention (203), par le processeur, d'une différence entre le degré de correspondance cible et un seuil de correspondance prédéfini ;
la détermination (204), par le processeur, que la caractéristique d'empreinte vocale cible satisfait la condition prédéfinie relative à la caractéristique d'empreinte vocale prédéfinie, quand la différence est inférieure ou égale à une différence prédéfinie ; et
la détermination, par le processeur, que la caractéristique d'empreinte vocale cible ne satisfait pas la condition prédéfinie relative à la caractéristique d'empreinte vocale prédéfinie, quand la différence est supérieure à la différence prédéfinie.

6. Procédé selon a revendication 2, dans lequel plus la valeur de bruit de l'environnement actuel est grande, plus la valeur de volume cible est grande.

7. Procédé selon la revendication 1, dans lequel la détermination (103) par le procédé que le terminal est situé ou non à un emplacement prédéfini comprend :
l'obtention, par le processeur, d'informations d'un point d'accès WiFi auquel le terminal est actuellement connecté ;
la détermination, par le processeur, que les informations du point d'accès WiFi sont ou non des informations d'un point d'accès WiFi prédéfini, les informations du point d'accès WiFi prédéfini étant des informations de l'un quelconque d'au moins un point d'accès WiFi à l'emplacement prédéfini ; et
la détermination, par le processeur, que le terminal est situé à l'emplacement prédéfini, quand les informations du point d'accès WiFi sont les informations du point d'accès WiFi prédéfini.

8. Appareil (300) de rappel d'emplacement, comprenant :
un module d'extraction (301), configuré pour extraire une caractéristique d'empreinte vocale cible d'une voix configurée pour la recherche d'un terminal, après réception de la voix ; l'appareil étant **caractérisé en ce qu'**il comprend :
un module de détermination (302), configuré pour déterminer que la caractéristique d'empreinte vocale cible satisfait ou non une condition prédéfinie relative à une caractéristique d'empreinte vocale prédéfinie, quand la caractéristique d'empreinte vocale cible ne correspond pas à la caractéristique d'empreinte vocale prédéfinie ;
un module de détection (303), configuré pour détecter que le terminal est situé ou non à un emplacement prédéfini quand la caractéristique d'empreinte vocale cible satisfait la condition prédéfinie relative à la caractéristique d'empreinte vocale prédéfinie ; et
un module de rappel (304), configuré pour déclencher un rappel d'emplacement d'une manière prédéfinie afin de rappeler à un utilisateur où se trouve le terminal, quand le terminal est situé à l'emplacement prédéfini.

9. Appareil selon la revendication 8, comprenant en outre :
un module d'obtention (305), configuré pour obtenir une valeur de bruit d'un environnement actuel et déterminer une valeur de volume cible en fonction de la valeur de bruit ;
dans lequel le module de rappel (304) est configuré pour déclencher le rappel d'emplacement par une sonnerie avec la valeur de volume cible pour rappeler à l'utilisateur où se trouve le terminal.

10. Appareil selon la revendication 9, comprenant en outre un module de réglage (306), configuré pour :
augmenter la valeur de volume cible de la sonnerie, quand l'utilisateur n'a pas trouvé le terminal après une durée prédéfinie ; et
déclencher en continu le rappel d'emplacement par la sonnerie avec la valeur de volume cible augmentée pour rappeler à l'utilisateur où se trouve le terminal.

11. Appareil selon la revendication 8, dans lequel le module de détermination (302) est configuré pour :
obtenir un degré de correspondance de la cible entre la caractéristique d'empreinte vocale cible et la caractéristique d'empreinte vocale prédéfinie;
obtenir une différence entre le degré de correspondance cible et un seuil de correspondance préétabli ;
déterminer que la caractéristique d'empreinte vocale cible satisfait la condition prédéfinie relative à la caractéristique d'empreinte vocale prédéfinie, quand la différence est inférieure ou égale à une différence prédéfinie ; et
déterminer que la caractéristique d'empreinte vocale cible ne satisfait pas la condition prédéfinie relative à la caractéristique d'empreinte vocale prédéfinie, quand la différence est supérieure à la différence prédéfinie.

12. Appareil selon la revendication 9, dans lequel plus la valeur de bruit de l'environnement actuel est grande, plus la valeur de volume cible est grande.

13. Dispositif électronique (400, 500), comprenant une mémoire (402, 502) et un processeur (403, 503), dans lequel le processeur (403, 503) est configuré pour exécuter un programme d'ordinateur stocké dans la mémoire (402, 502) afin de réaliser un procédé selon l'une quelconque des revendications 1 à 7.
